# EUROPEAN PATENT APPLICATION

(11) **EP 1 249 764 A2**
(43) Date of publication of application: **16.10.2002**
(21) Application number: 01109060.2
(22) Date of filing: 11.04.2001
(51) Int. Cl.: G06F 15/17

(54) **Processor system**

(30) Priority: 11.04.2000 JP 2000109415
(71) Applicant: NEC CORPORATION, Tokyo (JP)
(72) Inventor: Toda, Kazumasa, Ishikawa-gun, Ishikawa (JP)
(74) Representative: Betten & Resch

(57) **Abstract**

A hardware resources partitioning means partitions hardware resources that are necessary to the operation of a second operating system from a hardware resources management table before activation of a first operating system. After a second operating system activation means activates the second operating system, a first operating system activation means activates the first operating system.

## Description

### BACKGROUND OF THE INVENTION:

### 1. Field of the Invention:

The present invention relates to a processor system that causes an operating system of another architecture to operate on the processor system in which an operating system of an architecture operates, at the same time and independently of the operating system of the architecture.

### 2. Description of the Related Art:

With improvements in recent years of the features and performance of inexpensive hardware that is not dependent on specific makers and of operating systems that operate on this hardware, there is a growing trend to replace centrally integrated systems on expensive general-purpose computers of the prior art with client-server open systems.

Nevertheless, the task of replacing a proprietary system on a general-purpose computers of the prior art with an open system all at once entails considerable time and expense, and in many cases such a transition is not possible.

As a result, methods have been adopted in which a system is built that unites an open system and a general-purpose computer while incorporating the advantages of both, and in which the transition toward an open system is in stages.

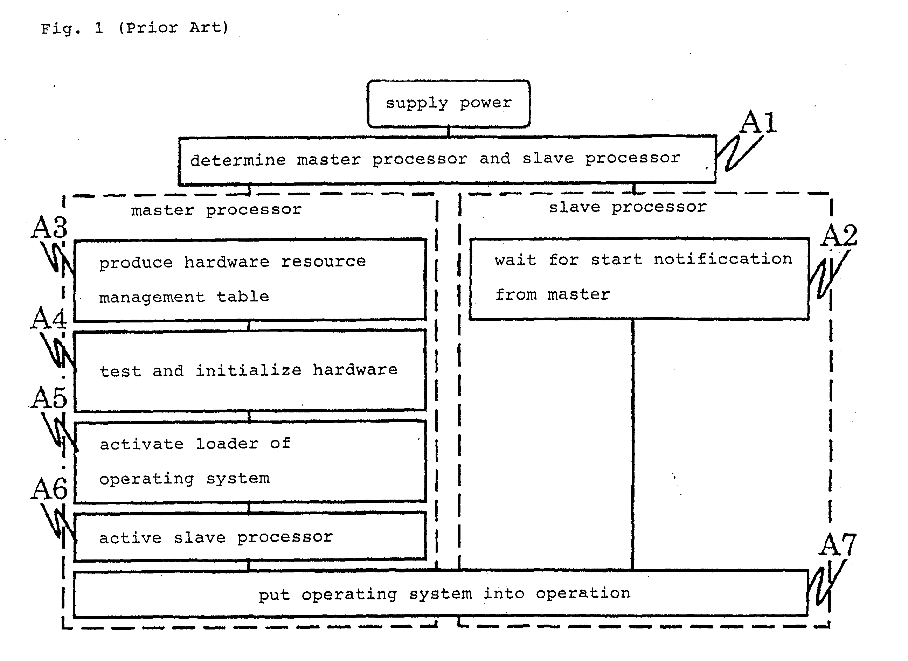

Turning now to the flow chart of Fig. 1, the operations upon activation of an open system of the prior art are next explained.

In a case in which a plurality of processors are connected, the master processor is determined by a specific algorithm upon supply of power to the open system (Step A1) and the other processors enter a standby state of waiting as slaves for a start notification from the master (Step A2). In the master processor, firmware processes that are stored in storage device 40 are started. At this time, hardware resource management table 200, which is a table for transferring information to the operating system regarding connected hardware resources, is produced at a specific address of memory 30 (Step A3). A test for checking whether this hardware is normal and an initializing process are also carried out (Step A4). Next, in order to activate the operating system, an initial program loader, which is in a specific area of disk 70, is expanded to a specific address of memory 30 and executed (Step A5). This initial program loader expands the loader of the operating system on disk 70 to an address that differs from hardware resource management table 200 of memory 30, and, after creating a page table for realizing virtual memory and an interruption management table for handling interruptions based on the information of hardware resource management table 200, activates slave processors that are in a standby state (Step A6), and puts the operating system into operation (Step A7).

As methods of uniting an open system and a general-purpose computer, there are: first, one method in which the general-purpose computer and the open system are connected by an outside network such as a local area network and data are exchanged;
second, a method in which a node of the open system and a node of the general-purpose computer are incorporated in a single unit of hardware and connected by an internal network realized by special hardware, and data then exchanged; and
third, a method in which the operating system of the general-purpose computer is emulated as middleware on a server of the open system.

Although the first method can be realized by only a combination of the prior art, this method is limited with regard to high-speed exchange of data due to the overhead that accompanies communication on outside network connections. This method further entails continued use of the expensive general-purpose computer.

The second method enables high-speed data exchange through the use of an internal network but requires both special hardware for the internal connection as well as the expensive general-purpose computer as the central hardware.

Although the third method can be realized inexpensively by the open system alone without using special hardware or an outside network, this method has the problem that, in order to operate the operating system of the general-purpose computer as middleware on the open operating system, the operating system of the general-purpose computer must be greatly amended to match the behavior of the open operating system.

One problem in realizing a system that unites an open system and a general-purpose computer as a step in the transition to an inexpensive system has been the difficulty of reducing the system cost resulting from the continued use of an expensive general-purpose computer.

Another problem in realizing a system that unites an inexpensive open system and a general-purpose computer has been the necessity of greatly modifying prior art systems for emulation on the operating system of the open system.

### SUMMARY OF THE INVENTION

It is an object of the present invention to provide a heterogeneous processor system that realizes a system that unites an open system and a general-purpose computer environment that operates at high speed using only an open system that employs inexpensive hardware and software that do not depend on specific makers, thereby solving the above-described problems.

To achieve the above-described object, the processor system according to the present invention includes: means for partitioning the hardware resources that are used by a first operating system and the hardware resources that are used by a second operating system before activating the first operating system; means for storing the types and quantities of partitioned hardware resources; means for activating the second operating system by hardware resources that have been reserved for use by the second operating system; and means for activating the first operating system by hardware resources that have been reserved for use by the first operating system; wherein the hardware resources that are necessary to the second operating system are reserved before activating the first operating system, and the first operating system and second operating system are then operated simultaneously and independently.

In addition, a processor system according to the present invention is capable of modifying, with each activation of the system, the types and quantities of the hardware resources that are used by the first operating system and of the hardware resources that are used by the second operating system.

Further, the processor system according to the present invention allows communication between the first operating system and second operating system by way of memory.

Finally, by carrying out input/output processing with an outside input/output device by the first operating system and not by the second operating system, the processor system according to the present invention both reduces the amount of development of the second operating system and enables use of the most recent outside input/output device that is used in the first operating system from the second operating system.

The above and other objects, features, and advantages of the present invention will become apparent from the following description based on the accompanying drawings which illustrate examples of preferred embodiments of the present invention.

### BRIEF DESCRIPTION OF THE DRAWINGS

Fig. 1 is a flow chart showing the operation at the time of system activation in the prior art.
Fig. 2 is a block diagram showing the system architecture of a first embodiment of the present invention.
Fig. 3 is a block diagram showing the construction of the first embodiment of the present invention.
Fig. 4 shows the structure of the partitioned hardware resources management table of the first embodiment of the present invention.
Fig. 5 shows the structure of the hardware resources management table of the first embodiment of the present invention.
Fig. 6 shows the structure of the processor management table in the hardware resources management table of the first embodiment of the present invention.
Fig. 7 shows the structure of the interruption management table in the hardware resources management table of the first embodiment of the present invention.
Fig. 8 shows the structure of the memory management table in the hardware resources management table of the first embodiment of the present invention.
Fig. 9 shows the structure of the emulation hardware resources management table of the first embodiment of the present invention.
Fig. 10 is a flow chart showing the operation in the first embodiment of the present invention at the time of system activation.
Fig. 11 is a flow chart showing the steps of the hardware partitioning process of the second embodiment of the present invention.
Fig. 12 shows the structure of the partitioned hardware resources management table of the third embodiment of the present invention.
Fig. 13 shows the structure of the emulation hardware resources management table of the third embodiment of the present invention.
Fig. 14 shows the structure of the shared memory management table of the third embodiment of the present invention.
Fig. 15 shows the structure of the communication device of the third embodiment of the present invention.
Fig. 16 shows the structure of the interruption management table in the hardware resources management table of the third embodiment of the present invention.
Fig. 17 is a block diagram showing the configuration of the third embodiment of the present invention.
Fig. 18 shows the structure of the command table of the third embodiment of the present invention.

### DETAILED DESCRIPTION OF THE PREFERRED EMBODIMENTS

### First Embodiment of the Present Invention

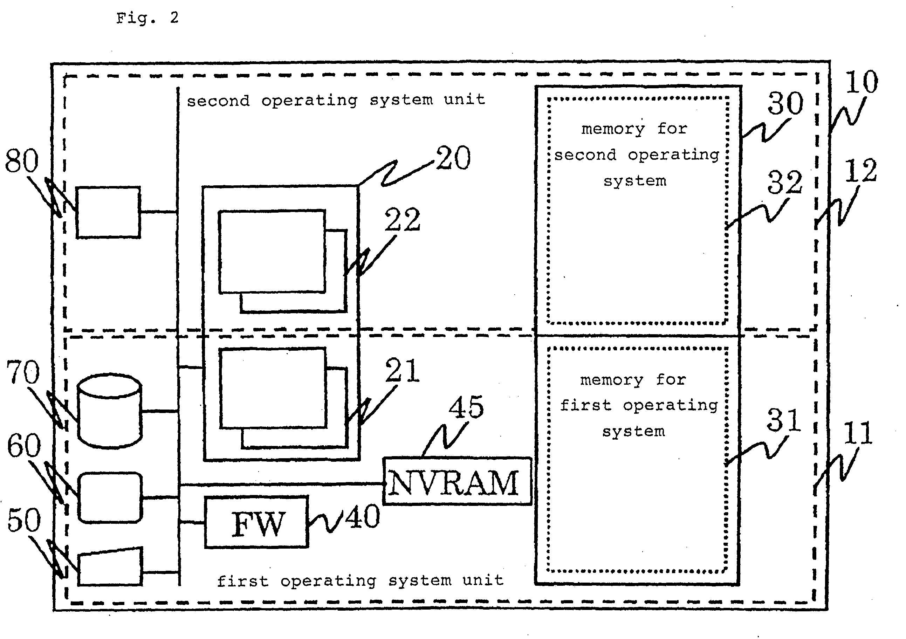

Turning now to the accompanying drawings, the first embodiment of the present invention is next explained. In Fig. 2, open system computer 10 is provided with processor 20, memory 30, storage device 40 for storing the firmware that operates first at the time of system activation, and nonvolatile memory 45 in which content is saved even if the power supply is cut off. In addition, keyboard 50, display 60, disk 70, and outside input/output device 80 are connected to open system computer 10.

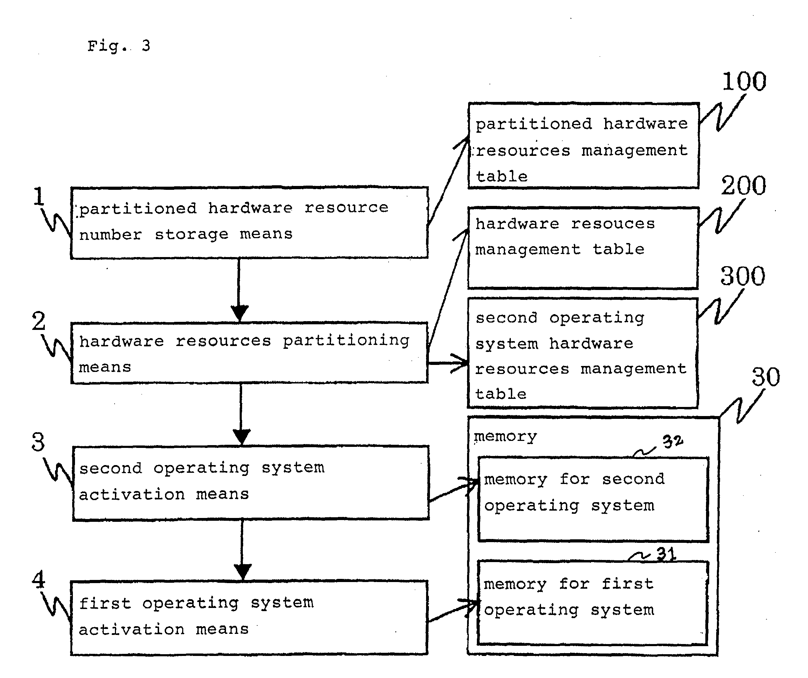

In Fig. 3, according to the information of partitioned hardware resources management table 100 that is obtained by partitioned hardware resource number storage means 1, hardware resources partitioning means 2 deletes hardware resource entries that are used in the second operating system from hardware resources management table 200 and stores these entries in second operating system hardware resources management table 300. The hardware resources that used in the second operating system are thus removed from management by the first operating system, and the hardware resources for the first operating system and the second operating system are logically partitioned.

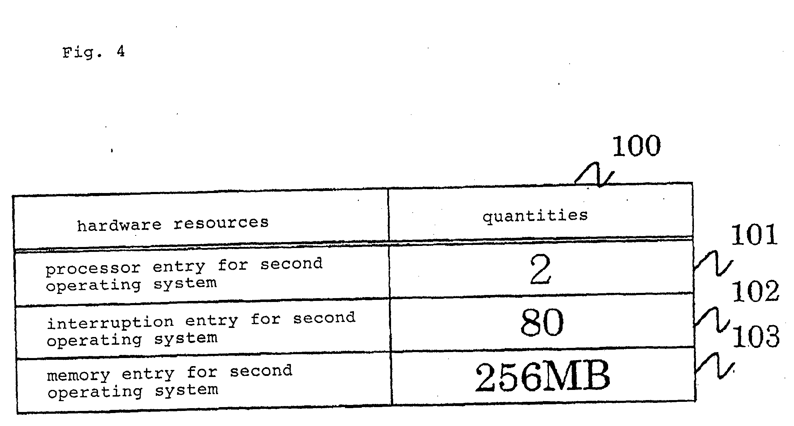

As shown in Fig. 4, according to an example of this invention, partitioned hardware resources management table 100 stores the types and quantities of hardware resources that are transferred from the management of the first operating system to the management of the second operating system. Partitioned hardware resources management table 100 is stored at a specific area of nonvolatile memory 45 or disk 70 so that the information is held even if the power supply is cut off.

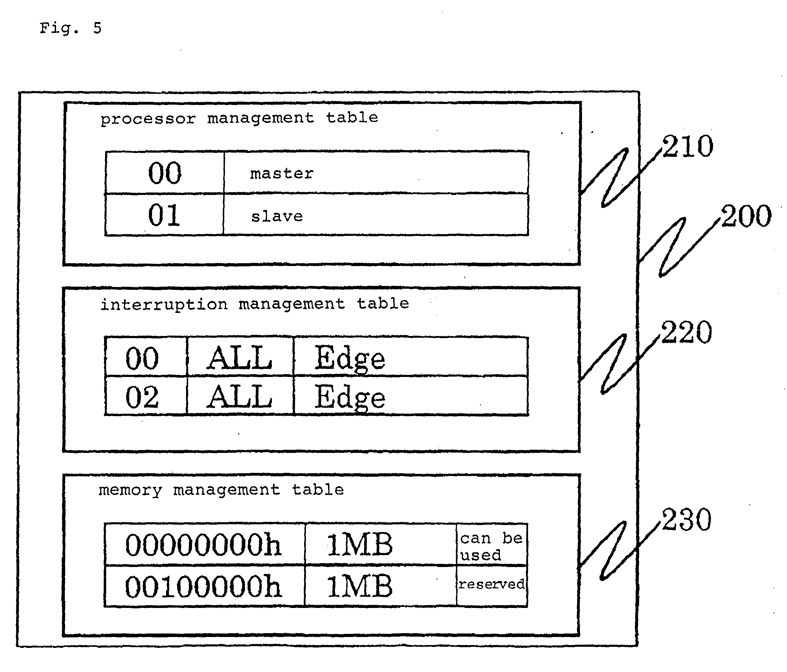

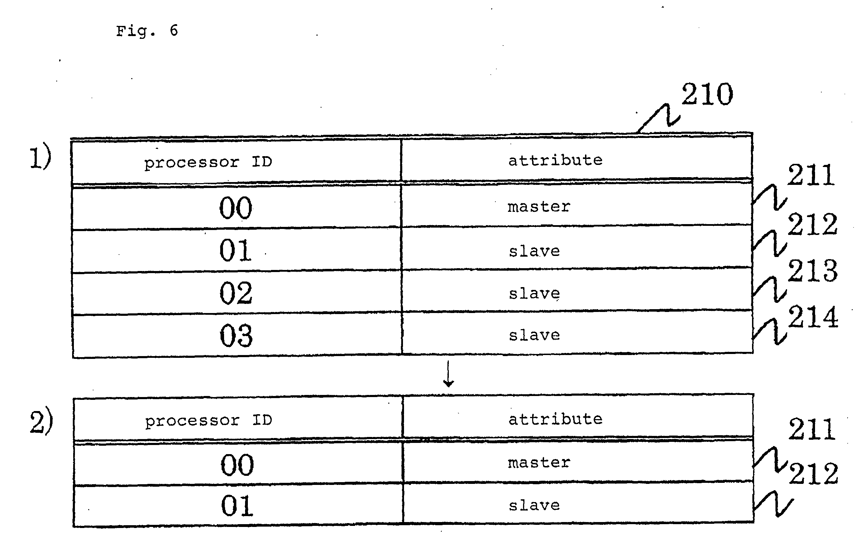

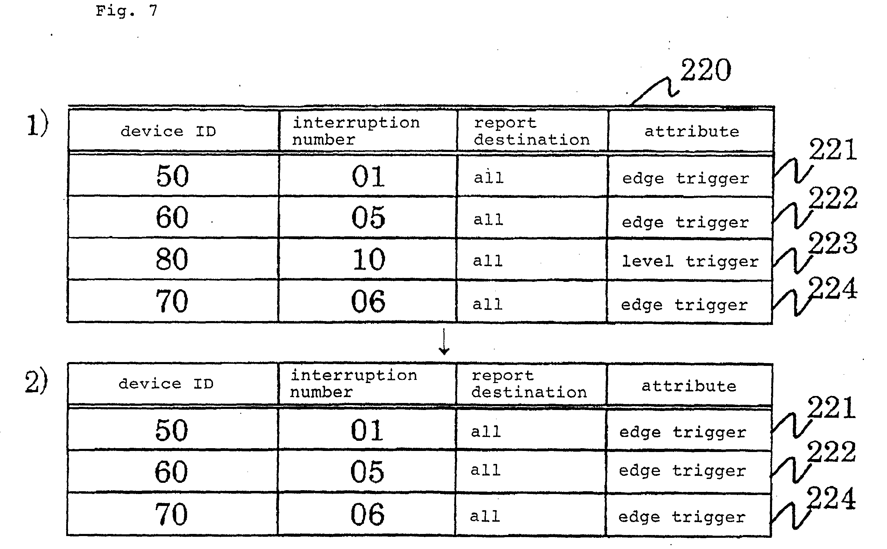

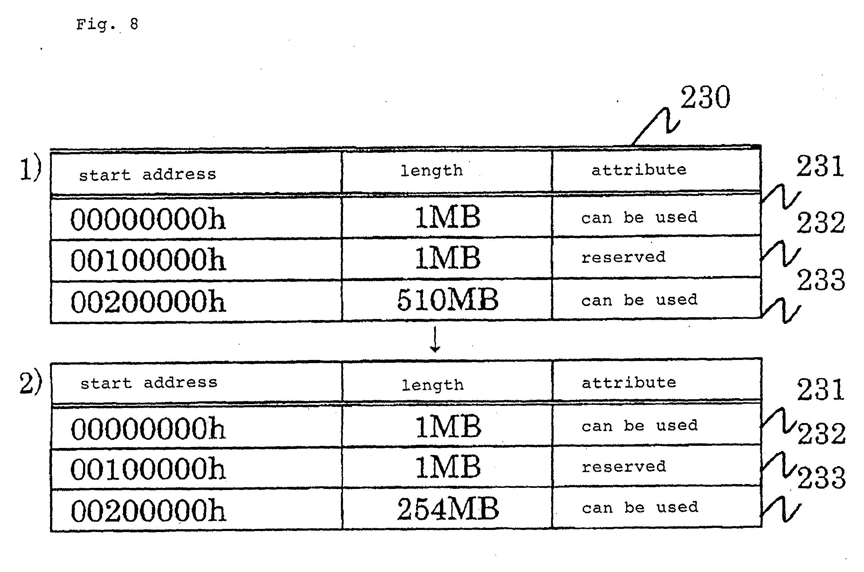

Hardware resources management table 200 that is shown in Fig. 5 holds a table for each hardware resource, and is created by firmware in an area in memory 30 that is managed by the firmware based on the hardware resources that are connected at the time of system activation. According to this example of the present invention, hardware resources management table 200 holds tables relating to processors, interruption, and memory. As shown in Fig. 6, processor management table 210 for managing processors includes the processor ID and an attribute that indicates whether a processor is a master or slave. According to Fig. 7, interruption management table 220 for managing interruptions includes: a device ID that specifies a device; an interruption number that indicates the interruption number of the interruption source; a report destination that indicates the processor that processes the interruption; and an attribute that indicates the trigger of an interruption, such as a level trigger or an edge trigger. According to Fig. 8, memory management table 230 for managing memory includes: the start address, the length, and an attribute that indicates whether memory can be used or is reserved by a system.

In an example of the present invention, hardware resources partitioning means 2 logically partitions processor 20 between processor 21 for the operating system of the open system, which is the first operating system, and processor 22 for emulation software that emulates a general-purpose computer, which is the second operating system; and logically partitions memory 30 between memory 31 for the first operating system and memory 32 for the second operating system. In addition, the connected external devices are also logically partitioned; keyboard 50, display 60, and disk 70 being assigned for the use of the first operating system, and outside input/output device 80 being assigned for the use of the second operating system. Finally, open system computer 10 is logically partitioned between first operating system unit 11 and second operating system unit 12.

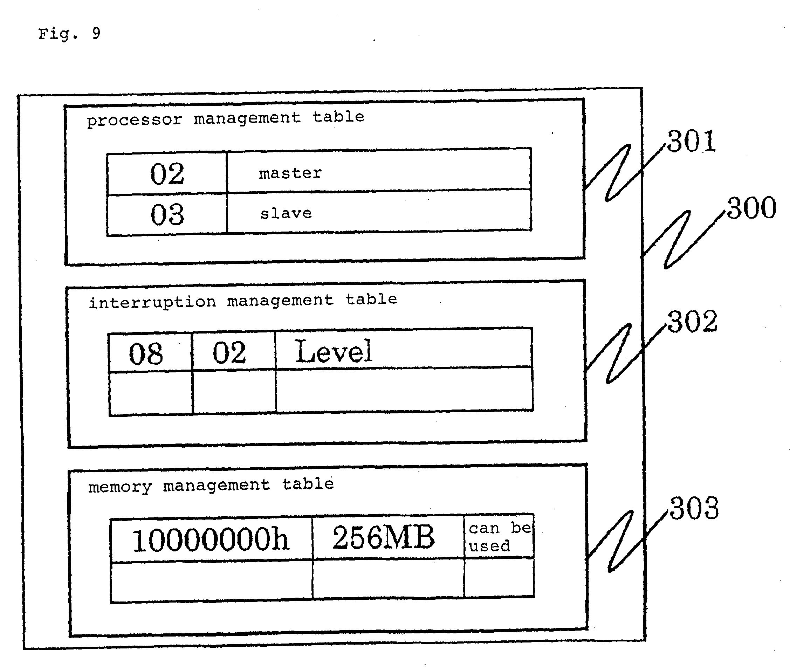

Second operating system hardware resources management table 300 that is shown in Fig. 9 is structured similar to hardware resources management table 200 and stores information relating to the hardware resources that are used by the second operating system. This table is created in a specific area of memory 32 by hardware resources partitioning means 2, and in this example of the present invention, is created in the leading area of memory 32.

Based on the information of second operating system hardware resources management table 300, second operating system activation means 3 loads the second operating system in an area of memory 32 other than that of second operating system hardware resources management table 300 and activates the second operating system by the processor for the second operating system. First operating system activation means 4 activates the first operating system by activating the loader of the first operating system.

The operation at the time of activation of the open system of the prior art is shown in the flow chart of Fig. 1.

In the example of the present invention, in. contrast, before the initial program loader expands and executes the loader of the first operating system in memory, a means that partitions hardware resources from the first operating system, based on information that is obtained from the means that has stored the numbers and capacities of hardware resources that have been partitioned from the first operating system, deletes processor 22, memory 32, and outside input/output device 80 from the table for managing hardware resources that was created by firmware. The image of the second operating system that is stored in disk 70 is next expanded in memory 32 and executed by processor 22. Finally, a heterogeneous environment is built by expanding in memory and executing the operating system loader of the open system that is the first operating system.

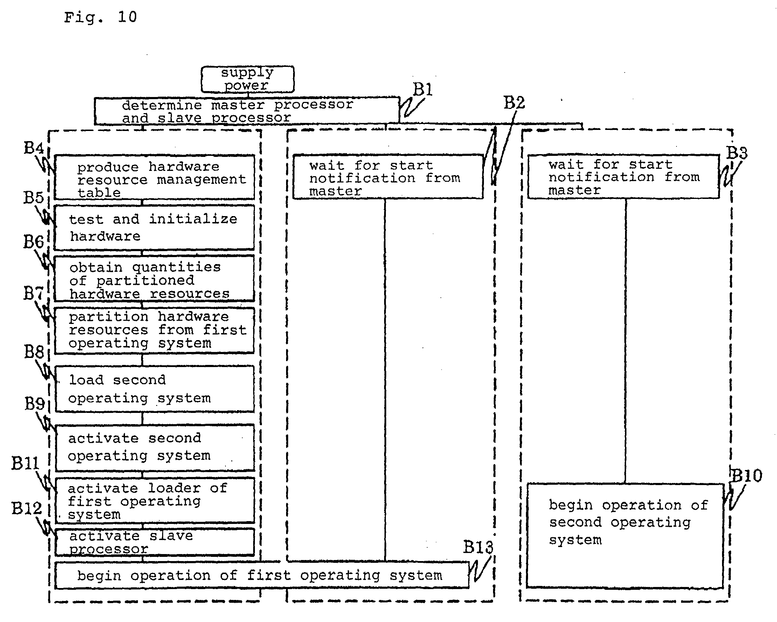

Turning now to the flow chart of Fig. 10, an explanation is next presented in more specific terms.

After the supply of power, the processors are determined as either masters or slaves as in the operating system of the prior art (Step B1). At this time, slave processors enter a standby state and wait for activation notification from a master (Steps B2 and B3). As in the prior art, in the master processor, firmware processes that are stored in storage device 40 begin, hardware resources management table 200 is created (Step B4), and hardware is tested and initialized (Step B5). Partitioned hardware resources quantity storage means 1 next obtains the quantities of partitioned hardware resources that are partitioned from partitioned hardware resources management table 100 (Step B6). Partitioned hardware resources management table 100 has the structure that is shown in Fig. 4 and is a table for storing the quantities of hardware resources that are reserved for use by the second operating system and is stored in a specific area of disk 70 or nonvolatile memory 45. Based on this information, hardware resources partitioning means 2 deletes the entries of hardware resources for the second operating system from hardware resources management table 200 or modifies the entries and partitions the hardware resources from the first operating system (Step B7).

More specifically, "2" is stored in processor entry 101 for the second operating system as shown in Fig. 4, and the two entries 213 and 214 for which the processor IDs are large are therefore deleted from the entries of processor management table 210 (1→2 in Fig. 6). Further, "80" is stored in interruption entry 102 for the second operating system as shown in Fig. 4, and entry 223 of device ID 80 is therefore deleted from the entry of interruption management table 220 (1 →2 in Fig. 7). Still further, "256 MB" is stored in memory entry 103 for the second operating system as shown in Fig. 4, and the length information of entry 233 that manages entries that are equal to or greater than 256 MB of the entries of memory management table 230 is therefore rewritten (1→2 in Fig. 8). In this way, two processors, one interruption, and 256 MB of memory are partitioned for use by the second operating system as hardware resources that cannot be managed by the first operating system. At this time, the master processor is contained in processor 21 and processor 22 is in standby as a slave processor. Hardware resources partitioning means 2 further creates, in the leading area of memory 32, second operating system hardware resources management table 300 that manages hardware resources that are used by the second operating system.

The second operating system is next read from a specific area of disk 70 to an area of memory 32 other than that of second operating system hardware resources management table 300 (Step B8), an activation notification is issued to processor 22 in which the start address of the second operating system is a parameter, and the second operating system is activated in the processor for the second operating system (Step B9). Based on the information of second operating system hardware resources management table 300, the second operating system creates a page table for realizing virtual memory or an interruption management table for handling interruptions and begins operation (Step B10). At the same time, first operating system activation means 4 expands an initial program loader of a specific area of disk 70 in a specific area of memory 30 to activate the first operating system and executes the initial program loader (Step B11). This initial program loader is no different from that of the prior art, and expands the first operating system loader on disk 70 in memory 30, and, based on the information of the hardware resources management table 200 that was created by the firmware, creates, for example, a page table for realizing virtual memory or an interruption management table for handling interruptions. At this time, the hardware resources that were reserved for use by the second operating system in Step B7 cannot be recognized from the first operating system. Slave processors that are in a standby state are then activated (Step B12) and the first operating system is placed in operation (Step B13).

Although the processes from Step B6 to Step B11 may be stored as firmware processes in storage device 40, it is preferable to store these processes on disk 70 as executable program images and then load and execute the executable program in the process of Step B6. This is because firmware that is stored in storage device 40 includes many processes that depend on hardware, and firmware is therefore created for each data processor as a portion of the hardware. In contrast, in the method of storing as executable program images on disk 70, program images that are common to all data processors can be added after creating the data processors. Furthermore, the addition and amendment of functions can be easily realized by storing on the disk.

As described hereinabove, the open system operating system and the operating system of a general-purpose computer that operates on a different architecture can both be operated independently and at the same time on the same system without adding modifications to the operating system of the open system.

### Second Embodiment of the Present Invention

Next, regarding the second embodiment of the present invention, this embodiment extends the first embodiment and, when adding on hardware resources such as processors and memory, enables easy designation of whether these hardware resources are to be used by the first operating system or by the second operating system.

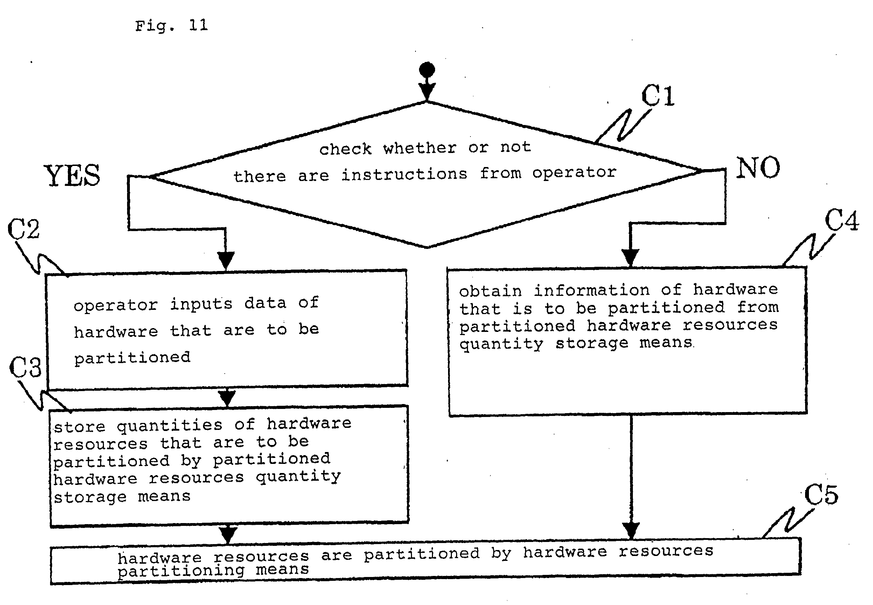

Fig. 11 is a flow chart showing the procedures of the hardware partitioning process of the second embodiment of the present invention.

Before obtaining information regarding the hardware resources that are to be partitioned from partitioned hardware resources quantity storage means 1, hardware resources partitioning means 2 of the first embodiment checks whether or not there are instructions from the operator (Step C1). If there are instructions, the operator inputs data of the hardware that are to be partitioned according to these instructions (Step C2) and stores the quantities of hardware resources that are to be partitioned by partitioned hardware resources quantity storage means 1 (Step C3). If there are no instructions, hardware resources partitioning means 2 obtains information of the hardware that is to be partitioned from partitioned hardware resources quantity storage means 1 (Step C4). The hardware resources are partitioned based on the respectively obtained information (Step C5).

When adding on hardware resources such as processors and memory, the above-described procedure facilitates instructing whether the added hardware resources are to be used by the first operating system or by the second operating system. Furthermore, the hardware resources can easily be adjusted for use by the first operating system or the second operating system according to load.

### Third Embodiment of the Present Invention

The third embodiment of the present invention is next described. This embodiment extends the first and second embodiments, enables exchange of data of the two operating systems by using memory areas to which the first operating system and second operating system can share access and, by using the ability for communication between the first operating system and second operating system, enables the use of an outside input/output device that is managed by the first operating system from the second operating system side.

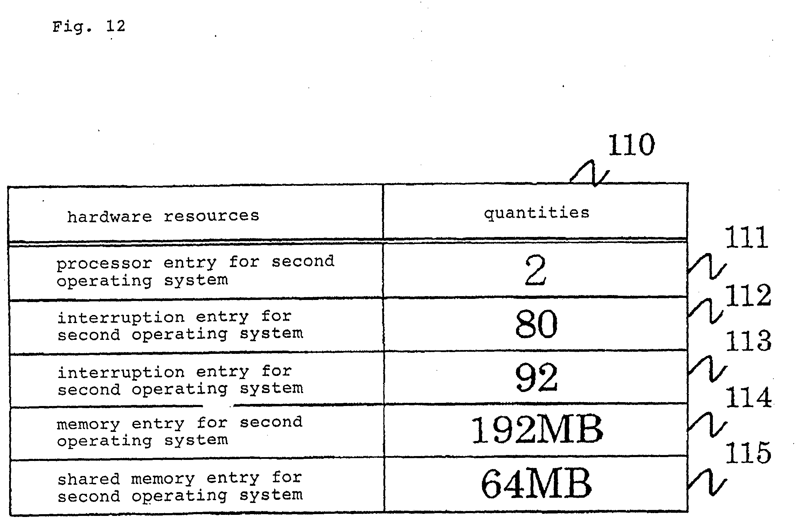

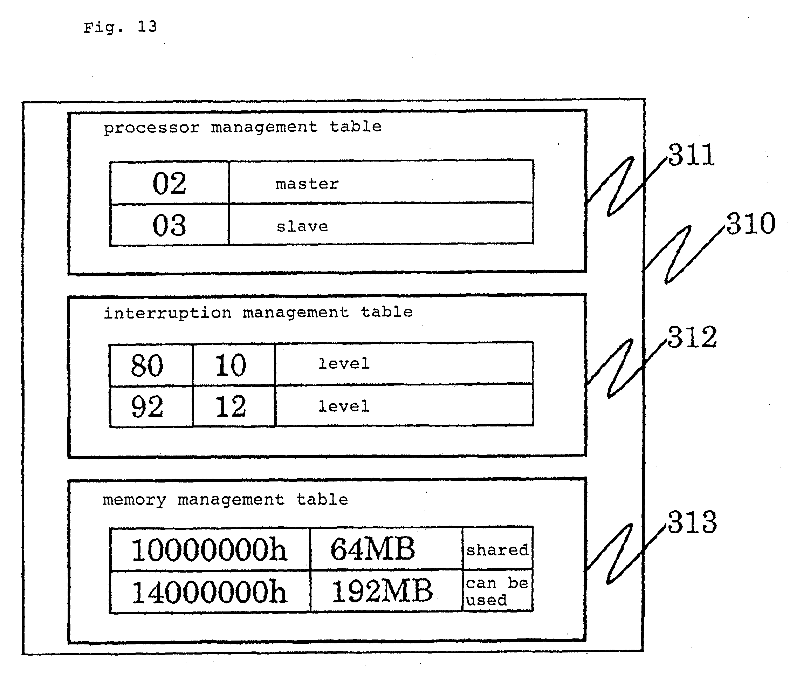

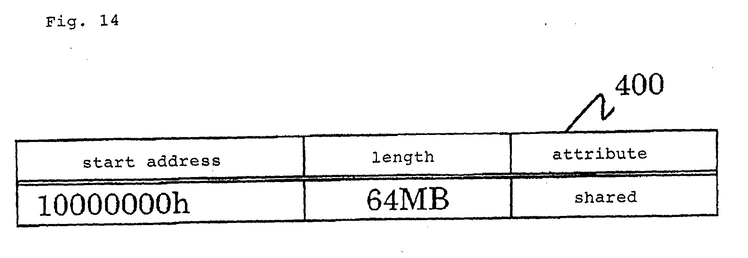

First, regarding the reservation of a shared memory, entry 115 relating to shared memory 33 is provided in partitioned hardware resources management table 110 as shown in Fig. 12. Hardware resources partitioning means 2 partitions the hardware resources based on this information that is obtained by partitioned hardware resources quantity storage means 1. At this time, entries having attributes indicating the size that is to be used as a shared memory and indicating that a memory is a shared memory are added in memory management table 313 in second operating system hardware resources management table 310 as shown in Fig. 13. In addition, shared memory management table 400 shown in Fig. 14 is stored in a file on disk 70 that can be accessed from the first operating system or in nonvolatile memory 45.

As a means for accessing a shared memory from the second operating system, a page table for accessing the shared memory is prepared based on memory management table 313 at the time of initializing the second operating system, and input/output processor 700 can access shared memory 33 by way of this page for shared memory.

As a means for accessing shared memory 33, first operating system device driver 600 is prepared in the first operating system. This first operating system device driver 600 obtains information of the start address and length of shared memory 33 from shared memory management table 400 at the time of initializing the driver and treats this shared memory 33 as an input/output space that is mapped in memory.

By means of the procedures described above, the first operating system and second operating system can realize high-speed exchange of data by way of shared memory 33 without using physical network equipment.

The communication capability between the first operating system and the second operating system is next described.

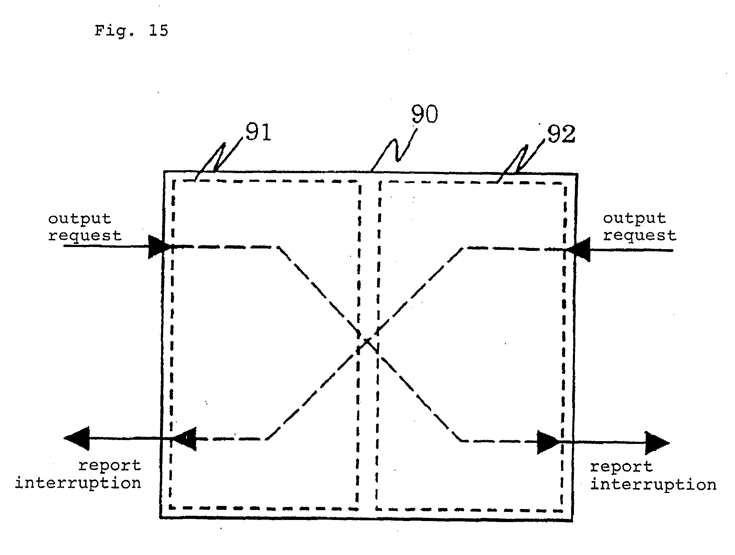

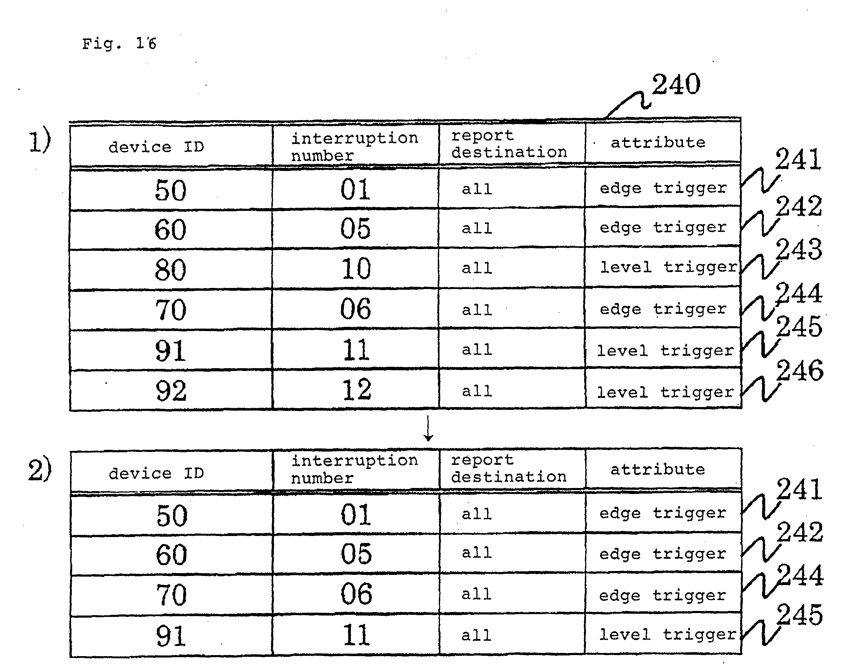

As a communication means between the first operating system and the second operating system, one example of the present invention employs communication device 90 that is capable of reporting, by a single device, two interruption signals to a processor as shown in Fig. 15. This communication device 90 logically includes logical unit 91 and logical unit 92 wherein logical unit 92 reports an interruption to a processor when there is an output request at logical unit 91 and logical unit 91 reports an interruption to the processor when there is an output request at logical unit 92. At the time of activating the system, firmware creates entries 245 and 246 for this communication device 90, which is an outside input/output device, in interruption management table 240 in the hardware resources management table, as shown in Fig. 16. Second operating system interruption entry 113 is stored in partitioned hardware resources management table 110 such that the interruption of logical unit 92 of communication device 90, which is an outside input/output device, is used in the second operating system. Hardware resources partitioning means 2 partitions the hardware resources based on this information, which is obtained by partitioned hardware resources quantity storage means 1.

The second operating system is assumed to have an input/output processor for processing output to logical unit 92 and interruptions from the same unit.

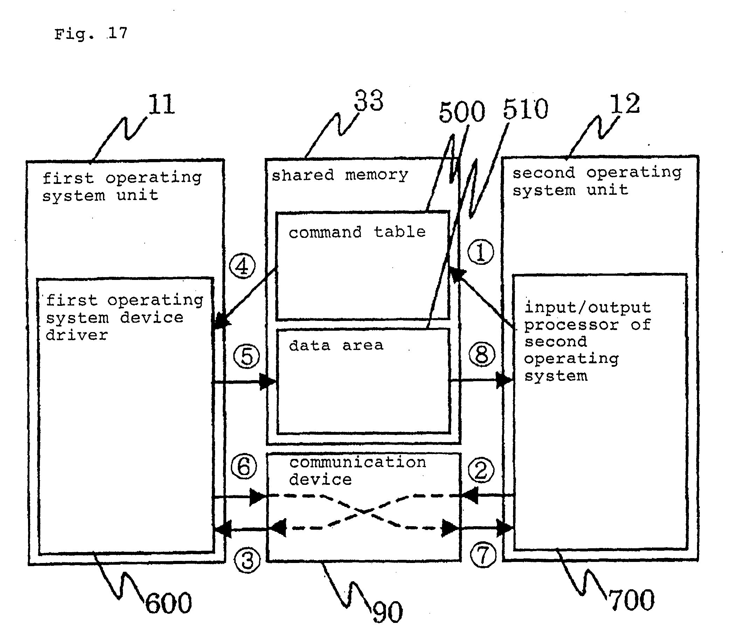

As shown in Fig. 17, first operating system device driver 600 is provided in the first operating system for processing output to and interruptions from logical unit 91 of communication device 90, which is an outside input/output device for use by the first operating system.

A method is next described for accessing communication device 90, which is an outside input/output device that is managed by the first operating system, from the second operating system.

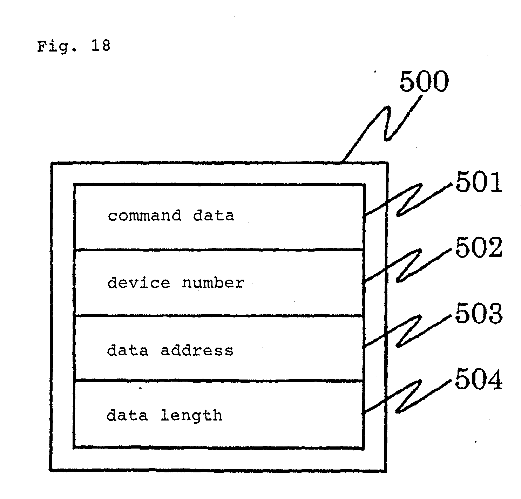

Command table 500 as shown in Fig. 18 is used between input/output processor 700 of the second operating system and first operating system device driver 600 of the first operating system. Command table 500 stores: command data 501 indicating input or output; device number 502 that is managed by the first operating system; address 503 in shared memory 33 that stores input/output data; and length 504 of the input/output data. Device number 502 may use numbers that are determined in advance by the second operating system and the device driver of first operating system, or may prepare a table that manages device numbers.

Explanation next regards an example of the operation that is shown in Fig. 17. When an input request is issued from the second operating system to the first operating system, command data that indicate input, the number of the device requesting input, the address of the input data, and the length of the data are stored in command table 500 (Step (1)) and an output request is outputted to logical unit 92 (Step (2)). Logical unit 92 reports an interruption from logical unit 91 to a processor that is managed by the first operating system. First operating system device driver 600 accepts this interruption (Step (3)), analyzes the command (Step (4)), processes the input from the device of the request, stores the input data at the designated address (Step (5)), and performs an output request to logical unit 91 (Step (6)). Logical unit 91 reports an interruption from logical unit 92 to a processor that is managed by the second operating system. The input/output processor of the second operating system accepts this interruption (Step (7)) and processes the input data (Step (8)).

Regarding the advantages of the present invention, the present invention as described hereinabove has the merit that an inexpensive open system and a general-purpose computer can coexist on the same computer without the need for special hardware if an emulation program of a general-purpose computer is used as the second operating system. Furthermore, the operating system of the general-purpose computer can be executed at high speed because the operating system of a general-purpose computer can be executed directly on a processor of the open system independent of the operating system of the open system. Finally, communication can be realized at high speed between the two operating systems because data of the two systems can be exchanged by way of memory.

While preferred embodiments of the present invention have been described using specific terms, such description is for illustrative purposes only, and it is to be understood that changes and variations may be made without departing from the scope of the following claims.

## Claims

1. A processor system, which is a heterogeneous processor system that causes a second operating system of a second architecture to operate together with a first operating system of a first architecture on a processor system in which said first operating system operates, comprising:
means for partitioning hardware resources of said processor system between hardware resources that are used by said first operating system and hardware resources that are used by said second operating system;
means for storing a type and quantity of said partitioned hardware resources;
means for activating said second operating system by said hardware resources that have been reserved for use by said second operating system; and
means for activating said first operating system by said hardware resources that have been reserved for use by said first operating system;
wherein said first operating system and said second operating system are able to operate simultaneously and independently.

2. A processor system according to claim 1 that includes means for modifying the types and quantities of said hardware resources that are to be partitioned before partitioning said hardware resources, and that is capable of modifying hardware resources that are used at a time of system activation.

3. A processor system according to claim 1 that includes means for reserving memory areas that can be shared by said first operating system and said second operating system, wherein data exchange between said first operating system and said second operating system can be performed by way of memory.

4. A processor system according to claim 2 that includes means for reserving memory areas that can be shared by said first operating system and said second operating system, wherein data exchange between said first operating system and said second operating system can be performed by way of memory.

5. A processor system according to claim 3 that includes means for realizing communication in said first operating system and said second operating system, wherein, through communication realized by said first operating system and said second operating system using shared memory areas, the system in which said first operating system operates is used as an input/output processor of the system in which said second operating system operates.

6. A processor system according to claim 4 that includes means for realizing communication in said first operating system and said second operating system, wherein, through communication realized by said first operating system and said second operating system using shared memory areas, the system in which said first operating system operates is used as an input/output processor of the system in which said second operating system operates.
